Europäisches Patentamt

European Patent Office

Office européen des brevets

(19)

(11) Veröffentlichungsnummer: **0 214 468**
**A2**

(12) **EUROPÄISCHE PATENTANMELDUNG**

(21) Anmeldenummer: **86110842.1**

(22) Anmeldetag: **05.08.86**

(51) Int. Cl.⁴: **G 01 L 9/04**

(30) Priorität: **07.09.85 DE 8525588 U**

(43) Veröffentlichungstag der Anmeldung:
**18.03.87 Patentblatt 87/12**

(84) Benannte Vertragsstaaten:
**DE FR GB IT SE**

(71) Anmelder: **ROBERT BOSCH GMBH**
**Postfach 50**
**D-7000 Stuttgart 1(DE)**

(72) Erfinder: **Jansche, Walter, Dipl.-Ing.**
**Pestalozzistrasse 7**
**D-7552 Durmersheim(DE)**

(72) Erfinder: **Zabler, Erich, Dr. Dipl.-Ing.**
**Brunhildstrasse 11**
**D-7513 Stutensee-Blankenloch(DE)**

(54) **Drucksensor.**

(57) Der Drucksensor zum Erfassen des Ansaugluftdrucks einer Fahrzeug-Brennkraftmaschine besteht aus einem plättchenförmigen Grundkörper (10) aus einem Stahlsubstrat, an dessen der dem Meßdruck abgewandten Seite z. B. eine Membran (13) aus Glaskeramik angebracht ist. Diese dehnt sich unter Druckeinwirkung. Das Maß der Dehnung wird durch an der Oberseite der Membran angeordnete Dehnmeßstreifen (17) erfaßt. Der Grundkörper (10) aus Stahlsubstrathat den Vorteil, daß er eine hohe Elastizität aufweist und deshalb ohne Schwierigkeiten an Maschinenteilen, z. B. durch Schrauben (16), befestigt werden kann.

**EP 0 214 468 A2**

R. 20207

2.9.1985 Wd/Kc

0214468

ROBERT BOSCH GMBH, 7000 Stuttgart 1

Drucksensor

Stand der Technik

Die Erfindung geht aus von einem Drucksensor nach der
Gattung des Hauptanspruchs. Bei einem derartigen bekannten Drucksensor besteht der Grundkörper aus einem
Keramiksubstrat. Das hat den Nachteil, daß infolge der
Sprödigkeit dieses Werkstoffs Schwierigkeiten hinsichtlich des Anbringens eines derartigen Drucksensors an
Maschinenteile besteht und der Sensor leicht zerstört
werden kann, wenn er beispielsweise auf eine harte Unterlage fällt.

Vorteile der Erfindung

Der erfindungsgemäße Drucksensor mit den kennzeichnenden Merkmalen des Hauptanspruchs hat demgegenüber den
Vorteil, daß die Elastizität von Metallsubstraten ein
problemloses Befestigen des Drucksensors, sei es durch
Anpressen, Schrauben oder sonstwie, erlaubt. Hierbei
kann der Bereich der Befestigung frei von Isolationsmaterial bleiben. Problemlos ist auch die Zuführung
eines Meß- oder Referenzdruckes von der Substratrückseite her, z. B. mittels eines angeschweißten Stutzens.

. . .

Hierdurch kann das eventuell aggressive Druckmedium von der empfindlichen Schaltungsseite ferngehalten werden. Eine Stutzenbefestigung auf der Unterseite leitet wesentlich weniger mechanische Störspannung in den Drucksensor, als eine Befestigung von seiner Oberseite her. Der Aufbau des Sensors erlaubt problemlos die Messung von Differenzdrücken. Zur Absolutdruckmessung kann die Ausnehmung an der Unterseite vakuumdicht verschweißt werden. Die Reduktion der Membran auf die Dicke der Glaskeramikschicht erlaubt besonders kleine Bauformen im Niederdruckbereich. Die Verwendung von Stahlsubstraten macht den Drucksensor im Vergleich zu Keramiksubstraten wesentlich zerstörsicherer, insbesondere auch gegen Beschleunigungskräfte, sei es durch Schwingungen an der Anbaustelle oder durch Aufprall auf den Boden.

Zeichnung

Ein Ausführungsbeispiel der Erfindung ist in der Beschreibung und in der nachfolgenden Zeichnung wiedergegeben. Diese zeigt einen Schnitt durch einen Dickschicht-Drucksensor.

Beschreibung des Ausführungsbeispiels

Der Grundkörper 10 des Drucksensors besteht aus einem plättchenförmigen Stahlsubstrat, das neuerdings für Dickschichthybride angeboten wird. Im Grundkörper 10 ist eine Kaverne 11 herausgearbeitet, z. B. spanabhebend oder durch Erosion, die entweder durchgehend sein kann oder nur bis zu einer gestrichelten Linie 12 reicht. Der schrägschraffierte Bereich 11A darüber kann beispielsweise durch Ätzen entfernt werden. Dies hängt ab von der Höhe des zu messen-

...

den Druckes. Er kann aber auch verbleiben, wenn hohe Drücke gemessen werden sollen, um die auf der Oberseite 10A des Grundkörpers 10 angeordnete Membran 13 zu schützen, die in Dickschichttechnik aus Glaskeramik hergestellt ist. Die Membran überdeckt den Bereich der Kaverne 11 und reicht weit darüber hinaus. Die Membran 13 kann zweckmäßigerweise als Paste im Siebdruckverfahren aufgebracht werden. Auf der Oberseite der Membran 13 sind zweckmäßigerweise im Bereich der Kaverne 11 Dehnmeßstreifen 17 zur Messung der Membrandehnung angeordnet. Gleichermaßen kann auf der Oberseite der Membran 13 außerhalb der Kaverne 11 auch eine Auswerteelektronik 14 aufgebracht sein. Bei hohen Drücken bleibt der schraffierte Bereich 11A bestehen und übernimmt die Funktion der Membran. Die Dehnmeßstreifen 17 werden dann direkt oberhalb des schraffierten Bereichs angebracht und darüber eine Glaskeramikschicht aufgebracht, die dann nur noch als Isolation dient.

Zweckmäßig ist es, auf der Unterseite 10B des Grundkörpers 10 im Bereich der Kaverne einen Anschlußstutzen 15 anzubringen, der beispielsweise an den Grundkörper angeschweißt ist. Mit Hilfe des Stutzens 15 kann der Drucksensor leicht an irgendeinem beliebigen Maschinenteil angebracht werden. Dies ist jedoch auch möglich mit Hilfe einer Schraube 16, die beispielsweise mit ihrem Kopf den Grundkörper an ein Maschinenteil andrückt. Der Grundkörper kann hierbei nicht beschädigt werden, da das Stahlsubstrat eine hohe Elastizität und Duktilität aufweist. Der Meßdruck wird über den Stutzen 15 zugeleitet. Dabei dehnt sich die Membran geringfügig.

R. 20207

2.9.1985 Wd/Kc

0214468

ROBERT BOSCH GMBH, 7000 Stuttgart 1

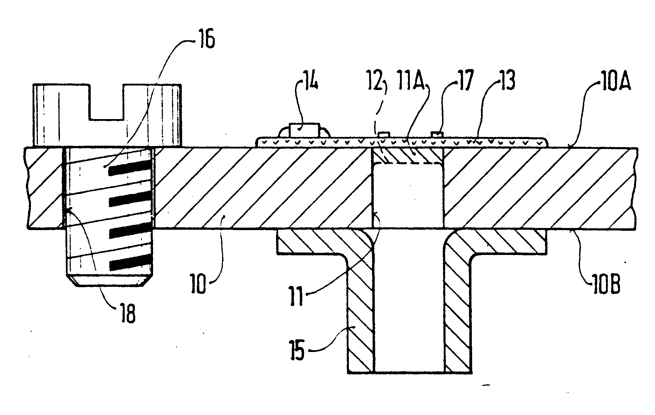

Ansprüche

1. Drucksensor, insbesondere zum Erfassen des Ansaugluftdrucks einer Fahrzeugbrennkraftmaschine, bestehend
aus einem etwa plättchenförmigen Grundkörper und einer
an diesem angeordneten, druckabhängig deformierbaren Membran, dadurch gekennzeichnet, daß der Grundkörper ein
Stahlsubstrat ist.

2. Sensor nach Anspruch 1, dadurch gekennzeichnet, daß
dieser zugleich auch die Membran (11A) bildet.

3. Sensor nach Anspruch 1 und/oder 2, dadurch gekennzeichnet, daß der Grundkörper (10) eine dem Meßdruck zugewandte,
insbesondere durchgehende Ausnehmung (11) aufweist, an
deren dem Meßdruck abgewandter Seite eine separate, aus
Glaskeramik bestehende Membran (13) angeordnet ist.

4. Sensor nach Anspruch 3, dadurch gekennzeichnet, daß
die Membran aus Dickschichttechnik besteht.

5. Sensor nach einem der Ansprüche 1 bis 4, dadurch gekennzeichnet, daß an der Außenseite der Membran im Bereich der Ausnehmung Dehnmeßstreifen (17) zur Messung
der Membrandehnung angeordnet sind.

. . .

6. Sensor nach einem der Ansprüche 1 bis 5, dadurch gekennzeichnet, daß an der Unterseite des Grundkörpers (10) im Bereich der Ausnehmung ein Stutzen (15) angebracht ist.

7. Sensor nach einem der Ansprüche 1 bis 6, dadurch gekennzeichnet, daß an der Oberseite der Membran (12) eine Auswerteelektronik (14) angeordnet ist.

8. Sensor nach einem der Ansprüche 1 bis 7, dadurch gekennzeichnet, daß die Dehmeßstreifen in Dickschichttechnik ausgeführt sind.